(19) Europäisches Patentamt
European Patent Office
Office européen des brevets

(11) **EP 4 656 675 A1**

(12) **EUROPEAN PATENT APPLICATION**
published in accordance with Art. 153(4) EPC

(43) Date of publication:
**03.12.2025 Bulletin 2025/49**

(21) Application number: **24747204.6**

(22) Date of filing: **18.01.2024**

(51) International Patent Classification (IPC):
**C08J 5/18** (2006.01)  **B32B 27/34** (2006.01)
**B65D 65/40** (2006.01)

(52) Cooperative Patent Classification (CPC):
**B32B 27/34; B65D 65/40; C08J 5/18**

(86) International application number:
**PCT/JP2024/001289**

(87) International publication number:
**WO 2024/157875 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2023 JP 2023008257**

(71) Applicant: **Toyobo Co., Ltd.**
**Kita-ku**
**Osaka-shi, Osaka 530-0001 (JP)**

(72) Inventors:
• **UEDA, Kazushige**
  **Inuyama-shi, Aichi 484-8508 (JP)**
• **GOTO, Takamichi**
  **Inuyama-shi, Aichi 484-8508 (JP)**
• **NAGASAKA, Ayame**
  **Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY STRETCHED POLYAMIDE FILM, AND PACKAGING MATERIAL**

(57) An object of the present invention is to provide a thin biaxially-stretched polyamide film having a thickness of 12 μm or less, which has high transparency and can be conveyed with suppressed wrinkling during secondary processing, such as off-line coating, vapor deposition, lamination, printing, and bag-making.

The biaxially stretched polyamide film includes polyamide 6 as a main constituent component, wherein the film has an average thickness of 8 μm or more and less than 12 μm in each of a film flow direction and a film width direction, a standard deviation of thickness of 0.8 μm or less in each of the film flow direction and the film width direction, a static coefficient of friction and a kinetic coefficient of friction each being 0.9 or less on at least one surface of the film, a haze value of 7.0% or less, and a stress at 5% elongation of 40.0 MPa or more in the film flow direction.

[FIG. 1]

EP 4 656 675 A1

## Description

TECHNICAL FIELD

The present invention relates to a biaxially stretched polyamide film suitably used for packaging foodstuffs, beverages, battery packaging materials, pharmaceutical packaging materials, or the like.

BACKGROUND ART

Conventionally, biaxially stretched films made from polyamide have been widely used as various packaging material films. In recent years, in response to the movement toward a decarbonized society and plastic reduction, there have been increasing demands for reducing the thickness of biaxially stretched polyamide films.

In Patent Document 1, the slipperiness of the biaxially stretched polyamide film having a thickness of 15 $\mu$m under high humidity conditions is improved by increasing protrusions of 0.1 $\mu$m or more through the addition of an organic lubricant and a specific inorganic filler.

CITATION LIST

PATENT DOCUMENT

Patent Document 1: JP-A-2017-171740

SUMMARY OF THE INVENTION

PROBLEMS TO BE SOLVED BY THE INVENTION

Thin films produced by conventional techniques often wrinkle during secondary processing such as off-line coating, vapor deposition, lamination, printing, and bag-making. For example, when the thin film undergoes secondary processing, the resistance to the initial sliding is greater than the tension in the film conveyance direction, causing longitudinal wrinkles in the direction parallel to the conveyance direction.

It is an object of the present invention to provide a thin biaxially-stretched polyamide film having a thickness of less than 12 $\mu$m, which has high transparency and can be conveyed with suppressed wrinkling in secondary processing, such as off-line coating, vapor deposition process, lamination, printing, and bag-making.

SOLUTION TO THE PROBLEMS

A biaxially stretched polyamide film or a packaging material according to one or more embodiments is preferably any one of the following.

(1) A biaxially stretched polyamide film comprising polyamide 6 as a main constituent component,
wherein the film has:

an average thickness of 8 $\mu$m or more and less than 12 $\mu$m in each of a film flow direction and a film width direction;
a standard deviation of thickness of 0.8 $\mu$m or less in each of the film flow direction and the film width direction;
a static coefficient of friction and a kinetic coefficient of friction each being 0.9 or less on at least one surface of the film;
a haze value of 7.0% or less; and
a stress at 5% elongation of 40.0 MPa or more in the film flow direction.

(2) The biaxially stretched polyamide film according to 1, wherein the film comprises the polyamide 6 in an amount of 60% by mass or more and 100% by mass or less.

(3) The biaxially stretched polyamide film according to 1 or 2, wherein the film has a protrusion density of 500 protrusions/mm$^2$ or more and 5000 protrusions/mm$^2$ or less at a slice level of 0.1 $\mu$m and a protrusion density of 5 protrusions/mm$^2$ or more and 400 protrusions/mm$^2$ or less at a slice level of 0.8 $\mu$m.

(4) The biaxially stretched polyamide film according to any one of 1 to 3, wherein the film comprises a substrate layer and a functional layer on at least one surface of the substrate layer, wherein the substrate layer comprises the polyamide 6 in an amount of 80% by mass or more and 99% by mass or less and an anti-pinholing agent in an amount of 1% by mass or more and 20% by mass or less, and wherein the functional layer comprises the polyamide 6 in an amount of 70% by mass or more and 100% by mass or less.

(5) The biaxially stretched polyamide film according to 4, wherein the substrate layer comprises the polyamide 6 in an amount of 80% by mass or more and 90% by mass or less.

(6) The biaxially stretched polyamide film according to 4 or 5, wherein the anti-pinholing agent comprises at least one selected from the group consisting of a polyolefin, an ionomer polymer, a thermoplastic elastomer, an aliphatic polyester resin, an aliphatic-aromatic polyester resin, and mixtures thereof.

(7) The biaxially stretched polyamide film according to 4 or 5, wherein the anti-pinholing agent comprises at least one selected from the group consisting of an aliphatic polyester resin, an aliphatic-aromatic polyester resin, and mixtures thereof.

(8) The biaxially stretched polyamide film according to 4 or 5, wherein the anti-pinholing agent comprises at least one selected from the group consisting of polybutylene succinate, polybutylene succinate adipate, polybutylene adipate terephthalate, and mixtures thereof.

(9) The biaxially stretched polyamide film according to any one of 4 to 8, wherein the functional layer comprises the polyamide 6 in an amount of 70% by mass or more and 99% by mass or less and an aromatic polyamide resin in an amount of 1% by mass or more and 30% by mass or less.

(10) The biaxially stretched polyamide film according to any one of 4 to 9, wherein the functional layer comprises the polyamide 6 in an amount of 70% by mass or more and 99% by mass or less, and a silica fine particle having an average particle size of less than 5.0 $\mu$m in an amount of 0.1% by mass or more and 2.0% by mass or less.

(11) The biaxially stretched polyamide film according to any one of 4 to 10, wherein the functional layer comprises the polyamide 6 in an amount of 70% by mass or more and 99% by mass or less and an organic lubricant in an amount of 0.01% by mass or more and 0.40% by mass or less.

(12) The biaxially stretched polyamide film according to any one of 1 to 11, wherein the standard deviation of thickness is 0.1 $\mu$m or more in each of the film flow direction and the film width direction, wherein each of the static coefficient of friction and the kinetic coefficient of friction is 0.1 or more on at least one surface of the film, wherein the haze value is 1.0% or more, and wherein the stress at 5% elongation is 100 MPa or less in the film flow direction.

(13) A packaging material comprising: the biaxially stretched polyamide film according to any one of 1 to 12 and a sealant film.

(14) A packaging material comprising: the biaxially stretched polyamide film according to any one of 1 to 12, a metal layer, and a sealant film.

EFFECTS OF THE INVENTION

The above configurations enable the production of the biaxially stretched polyamide film that has high transparency and exhibits suppressed wrinkling during secondary processing, despite that the film is a thin film with a thickness of less than 12 $\mu$m. In particular, the biaxially stretched polyamide film suitable for packaging materials, battery packaging materials, and packaging bags can be provided.

BRIEF DESCRIPTION OF DRAWING

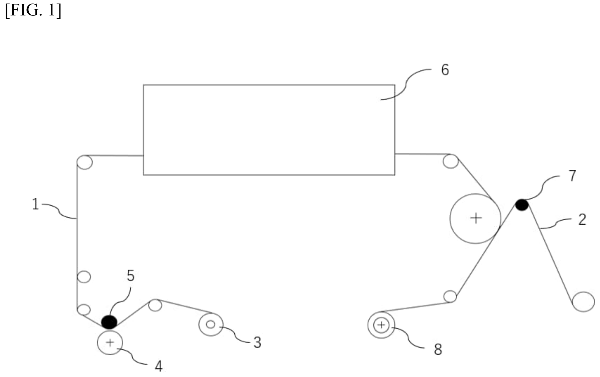

[FIG. 1] FIG. 1 is a schematic diagram illustrating a structure of a dry laminator used in Examples.

DESCRIPTION OF EMBODIMENTS

A biaxially stretched polyamide film according to one or more embodiments is a biaxially stretched polyamide film containing polyamide 6 as a main constituent component, wherein the film has an average thickness of 8 $\mu$m or more and less than 12 $\mu$m in each of the film flow direction and the film width direction, a standard deviation of thickness of 0.8 $\mu$m or less in each of the film flow direction and the film width direction, a static coefficient of friction and a kinetic coefficient of friction each being 0.9 or less on at least one surface of the film, a haze value of 7.0% or less, and a stress at 5% elongation of 40.0 MPa or more in the film flow direction. The above features enable the biaxially stretched polyamide film to have high transparency and exhibit suppressed wrinkling during secondary processing, despite that the film is a thin film with a thickness of less than 12 $\mu$m.

The biaxially stretched polyamide film according to one or more embodiments contains the polyamide 6 as a main constituent component. The term "main constituent component" means that the content of the polyamide 6 is preferably 60% by mass or more, more preferably 70% by mass or more, further preferably 80% by mass or more, and particularly preferably 90% by mass or more based on the total mass of the biaxially stretched polyamide film. The content of the polyamide 6 in the biaxially stretched polyamide film is preferably 100% by mass or less, more preferably 99% by mass or less, and further preferably 98% by mass or less. The content of the polyamide 6 in the biaxially stretched polyamide film is preferably from 60% by mass to 100% by mass, more preferably from 70% by mass to 99% by mass, further preferably from 80% by mass to 98% by mass, and particularly preferably from 90% by mass to 98% by mass.

Polyamide 6 is generally produced through ring-opening polymerization of $\varepsilon$-caprolactam. Typically, after ring-opening polymerization, the obtained polyamide 6 is treated with hot water to remove lactam monomers, then dried, and melt-extruded from an extruder. The relative viscosity of the polyamide 6 is preferably from 1.8 to 4.5, and more preferably from 2.6 to 3.2.

In addition to generally used polyamide 6 polymerized from fossil fuel-derived monomers, chemically recycled polyamide 6 from waste plastic products, waste tire rubber, and waste polyamide 6 products, such as fibers and fishing nets, can be used. Methods for chemically recycling polyamide 6 from waste polyamide 6 products include a method in which, for example, used polyamide products are collected and then depolymerized to obtain $\varepsilon$-caprolactam, and polyamide 6 is polymerized from purified $\varepsilon$-caprolactam.

In addition, mechanically recycled polyamide 6 from wastes generated in the production process of polyamide films can be used together. Mechanically recycled polyamide 6 is a pelletized material obtained by collecting, for example, out-of-spec films that cannot be shipped and waste materials such as cutting remnants (also known as ear trim) both generated during the production of biaxially stretched polyamide films, and then subjecting them to melt extrusion or compression molding.

The biaxially stretched polyamide film has the average thickness of preferably 8 $\mu$m or more and less than 12 $\mu$m, and more preferably 9 $\mu$m or more and 11 $\mu$m or less in each of the film flow direction and the film width direction. Although conventional biaxially stretched polyamide films have thicknesses of 15 $\mu$m or more, the biaxially stretched polyamide film according to one or more embodiments has overcome problems that occur in thin films having a thickness of less than 12 $\mu$m.

The biaxially stretched polyamide film preferably has the standard deviations of thickness of 0.8 $\mu$m or less, more preferably 0.6 $\mu$m or less, and further preferably 0.4 $\mu$m or less in the film flow direction and the film width direction. Adjusting the standard deviations of thickness to 0.8 $\mu$m or less in both the film flow direction and the film width direction can prevent the film from skewing during conveyance in the secondary processing. In particular, adjusting the standard deviation of thickness to 0.8 $\mu$m or less in the width direction can prevent gauge band of a roll after secondary processing, enabling the production of a roll with excellent appearance. As described later, the standard deviation of thickness can be adjusted to 0.8 $\mu$m or less by controlling the film stretching temperature and the film stretching ratio. The standard deviation of thickness closer to 0 $\mu$m is preferable, and the standard deviation of thickness may be 0.1 $\mu$m or more.

The biaxially stretched polyamide film preferably has both the static coefficient of friction and the kinetic coefficient of friction of preferably 0.9 or less on at least one surface of the film. More preferably, the biaxially stretched polyamide film has the static coefficients of friction and the kinetic coefficients of friction of 0.9 or less on one and the other surfaces of the film. The static coefficient of friction and the kinetic coefficient of friction are more preferably 0.7 or less, and further preferably 0.5 or less. Adjusting the coefficients of friction to 0.9 or less can prevent the film from skewing during conveyance in the secondary processing, thereby suppressing wrinkling during the processing. As described later, both the static coefficient of friction and the kinetic coefficient of friction can be adjusted to 0.9 or less by incorporating an inorganic fine particle having a specific pore volume or a combination of multiple types of inorganic fine particles having different pore volumes into the film. The static coefficient of friction and the kinetic coefficient of friction closer to 0 are preferable, and the static coefficient of friction and the kinetic coefficient of friction may be 0.1 or more, or 0.2 or more.

The biaxially stretched polyamide film has the haze value of preferably 7.0% or less, more preferably 5.0% or less, and further preferably 4.0% or less. A film with low haze value has high transparency and excellent gloss, enabling high-quality printing on a packaging bag formed from the film and enhancing the values of the product. When the film contains fine particles to improve its slipperiness, the fine particles cause voids formation in the film, resulting in impaired film transparency. However, as described later, even when the film contains the fine particles, the inclusion of an inorganic fine particle with a specific pore volume or a combination of multiple types of inorganic fine particles having different pore volumes allows the film to have a haze value of 7.0% or less. The haze value of closer to 0% is preferable, and the haze value may be 1.0% or more, or 2.0% or more.

The biaxially stretched polyamide film has the stress at 5% elongation in the film flow direction (hereinafter, may be referred to as an F5 value in the film flow direction) of preferably 40 MPa or more, more preferably 45 MPa or more, and further preferably 50 MPa or more, as determined by a tensile test. The F5 value of 40 MPa or more in the film flow direction can prevent the elongation of the film under tension of conveyance in the secondary processing, thereby eliminating wrinkling. As described later, the F5 value can be adjusted to 40 MPa or more, for example, by controlling the film stretching temperature and the film stretching ratio. The upper limit of the F5 value in the film flow direction is not particularly limited, and the F5 value may be 100 MPa or less, or 80 MPa or less. The stress at 5% elongation of the film in the film width direction (hereinafter, may be referred to as an F5 value in the film width direction) may not be 40 MPa or more, and is preferably 20 MPa or more, more preferably 30 MPa or more, further preferably 35 MPa or more, as determined by a tensile test. The upper limit of the F5 value in the film width direction is not particularly limited, and the F5 value in the film width direction may be 100 MPa or less, or 80 MPa or less.

With respect to a surface protrusion density, the biaxially stretched polyamide film preferably has a protrusion density of 500 protrusions/mm$^2$ or more at a slice level of 0.1 $\mu$m, and 5 protrusions/mm$^2$ or more at a slice level of 0.8 $\mu$m, as determined by a stylus 3D surface roughness meter. The biaxially stretched polyamide film more preferably has 1000 protrusions/mm$^2$ or more at a slice level of 0.1 $\mu$m and 20 protrusions/mm$^2$ or more at a slice level of 0.8 $\mu$m, and further preferably 1300 protrusions/mm$^2$ or more at a slice level of 0.1 $\mu$m and 30 protrusions/mm$^2$ or more at a slice level of 0.8 $\mu$m. The surface protrusion densities of the film within the ranges can impart excellent slipperiness to the film, preventing the film from skewing during conveyance in the secondary processing and suppressing wrinkling during the processing. As described later, the protrusion densities of the film can be adjusted to the ranges by incorporating an inorganic fine particle having a specific pore volume or a combination of multiple types of inorganic fine particles having different pore volumes. The upper limit of the protrusion density is preferably 5000 protrusions/mm$^2$ or less, more preferably 3000 protrusions/mm$^2$ or less at a slice level of 0.1 $\mu$m, and the upper limit of the protrusion density is preferably 400 protrusions/mm$^2$ or less, more preferably 200 protrusions/mm$^2$ or less, and further preferably 150 protrusions/mm$^2$ or less at a slice level of 0.8 $\mu$m. At a slice level of 0.1 $\mu$m, the protrusion density is preferably from 500 protrusions/mm$^2$ to 5000 protrusions/mm$^2$, more preferably from 1000 protrusions/mm$^2$ to 3000 protrusions/mm$^2$, and further preferably from 1300 protrusions/mm$^2$ to 3000 protrusions/mm$^2$. At a slice level of 0.8 $\mu$m, the protrusion density is preferably from 5 protrusions/mm$^2$ to 400 protrusions/mm$^2$, more preferably from 20 protrusions/mm$^2$ to 200 protrusions/mm$^2$, and further preferably from 30 protrusions/mm$^2$ to 150 protrusions/mm$^2$. The protrusion density can be determined by slicing a surface roughness image of the biaxially stretched polyamide film at a predetermined height and analyzing particle sizes. A lower slice level ($\mu$m) enables measuring the density of protrusions of various sizes, while a higher slice level ($\mu$m) enables measuring the density of larger protrusions. The slice level is preferably a distance ($\mu$m) from a reference position to the slice position in the thickness direction of the biaxially stretched polyamide film, when the middle position in the travel range of the contact probe in the thickness direction of the film is regarded as the reference position. For example, the slice position at a slice level of 0.1 $\mu$m is preferably located 0.1 $\mu$m outward in the thickness direction from the reference position, and the slice position at a slice level of 0.8 $\mu$m is preferably located 0.8 $\mu$m outward in the thickness direction from the reference position. By adjusting the protrusion density to the above range at each level, the effect of reducing friction by reducing the contact area by means of large protrusions and the effect of avoiding a reduction in transparency by reducing the number of large protrusions by means of the small protrusions, can be easily achieved simultaneously.

The biaxially stretched polyamide film has the heat shrinkage rates of preferably 0.6% or more and 3.0% or less, and more preferably 0.6% or more and 2.5% or less in both the flow direction and the width direction of the film after heating at 160°C for 10 minutes. The film having a heat shrinkage rate of 3.0% or less can be prevented from curling and shrinking when subjected to subsequent heat-applying processes such as lamination and printing processes. Although the film can have a heat shrinkage rate of less than 0.6%, the film may become mechanically fragile, resulting in deteriorated productivity; hence, the heat shrinkage rate is preferably 0.6% or more.

The biaxially stretched polyamide film has an impact strength of preferably 0.6 J/10$\mu$m or more, and more preferably 0.7 J/10$\mu$m or more. The impact strength of 0.6 J/10$\mu$m or more can impart mechanical strength required for a packaging material. The upper limit of the impact strength is not particularly limited, and the upper limit may be 2.0 J/10$\mu$m or less, or 1.0 J/10$\mu$m or less.

The biaxially stretched polyamide film has a puncture strength of preferably 0.6 N/$\mu$m or more, more preferably 0.67 N/$\mu$m or more, and further preferably 0.7 N/$\mu$m or more. Even when solid contents and the like are filled in a bag, the puncture strength of 0.6 N/$\mu$m or more can prevent the formation of holes caused by the contents puncturing the bag or by external factors during transportation. The upper limit of the puncture strength is not particularly limited, and the upper limit may be 2.0 N/$\mu$m or less, or 1.0 N/$\mu$m or less.

The biaxially stretched polyamide film preferably has pinholes of 20 or less after a twist and bend test for 1000 cycles at 1°C using a Gelbo flex tester, and more preferably 10 or less. The film with fewer numbers of pinholes after the bend test exhibits superior bending pinhole resistance, enabling the production of a packaging bag that is less likely to develop pinholes due to loads during transport.

The biaxially stretched polyamide film may be a monolayer film or may have a laminated structure of multiple layers consisting of the same or different resin compositions. When the biaxially stretched polyamide film is a monolayer film, the film is preferably formed from a resin composition containing the polyamide 6 in an amount of 80% by mass or more and 100% by mass or less.

The biaxially stretched polyamide film preferably includes a substrate layer and a functional layer. The biaxially stretched polyamide film more preferably includes a functional layer, a substrate layer, and a functional layer in this order.

The substrate layer preferably contains the polyamide 6 in an amount of 80% by mass or more and 99% by mass or less, more preferably 80% by mass or more and 96% by mass or less, and further preferably 80% by mass or more and 90% by mass or less. The inclusion of the polyamide 6 in an amount of 80% by mass or more allows the polyamide film to have mechanical strength such as impact strength, and gas barrier properties. The upper limit of the content of the polyamide 6 is preferably 99% by mass or less, more preferably 96% by mass or less, and further preferably 90% by mass or less. Setting the upper limit as described above enables the substrate layer to contain components other than polyamide 6, allowing for the development of the characteristics of the components other than polyamide 6. The substrate layer may contain the polyamide 6 in an amount of 80% by mass or more and 100% by mass or less. The substrate layer may further contain an anti-pinholing agent in an amount of 1% by mass or more and 20% by mass or less. The inclusion of the anti-pinholing agent in an amount of 1% by mass or more enables improving the bending pinhole resistance effectively. The inclusion of the anti-pinholing agent in an amount of 20% by mass or less can prevent excessive elongation and excessive softening of the film caused by anti-pinholing agents.

The anti-pinholing agent is not particularly limited as long as it has the effect of imparting flexibility to the substrate layer, and at least one selected from the group consisting of a polyolefin, an ionomer polymer, a thermoplastic elastomer, an aliphatic polyester resin, an aliphatic-aromatic polyester resin, and mixtures thereof can be used as the anti-pinholing agent. The thermoplastic elastomer may contain at least one type selected from the group consisting of a polyester elastomer, a polyamide elastomer, a polyolefin elastomer, a polystyrene elastomer, a polyurethane elastomer, a polyvinyl chloride elastomer, and mixtures thereof. The anti-pinholing agent preferably contains an aliphatic polyester resin and/or an aliphatic-aromatic polyester resin. In other words, the anti-pinholing agent preferably contains at least one selected from the group consisting of an aliphatic polyester resin, an aliphatic-aromatic polyester resin, and mixtures thereof.

Polybutylene succinate or polybutylene succinate adipate is preferable as the aliphatic polyester resin, and polybutylene adipate terephthalate is preferable as the aliphatic-aromatic polyester resin from the viewpoint of characteristics related to flexibility. Specifically, the anti-pinholing agent preferably contains at least one selected from the group consisting of polybutylene succinate, polybutylene succinate adipate, polybutylene adipate terephthalate, and mixtures thereof. Each of the aliphatic polyester resin and the aliphatic-aromatic polyester resin preferably have a glass transition temperature "Tg" of -30°C or lower. The use of polyester copolymer having a glass transition temperature "Tg" of -30°C or lower enables high pinhole resistance under freezing conditions.

The substrate layer may further contain a polyamide resin at least partially derived from biomass. As the polyamide resin at least partially derived from biomass, at least one selected from the group consisting of polyamide 11, polyamide 610, polyamide 1010, polyamide 410, and mixtures thereof is preferably used.

The substrate layer may contain a thermoplastic resin other than polyamide 6 as long as the object of the present invention is not impaired. Examples of the thermoplastic resin other than polyamide 6 include polyamide resins such as polyamide 12, polyamide 66 resin, polyamide 6/12 copolymer resin, polyamide 6/66 copolymer resin, polyamide MXD6 resin, polyamide MXD10 resin, and polyamide 11/6T copolymer resin. The substrate layer may contain a thermoplastic resin other than polyamide-based thermoplastic resins, for example, polyester-based polymers such as polyethylene terephthalate, polybutylene terephthalate, and polyethylene-2,6-naphthalate, and polyolefin-based polymers such as polyethylene and polypropylene.

The substrate layer may contain other thermoplastic resins and various additives such as lubricants, heat stabilizers, antioxidants, antistatic agents, antifogging agents, ultraviolet absorbers, dyes, and pigments, if needed.

The functional layer preferably contains the polyamide 6 in an amount of 70% by mass or more and 100% by mass or less. The inclusion of the polyamide 6 in an amount of 70% by mass or more enables the production of the biaxially stretched polyamide film having mechanical strength such as high impact strength and gas barrier properties to oxygen and the like. The content of the polyamide 6 in the functional layer is more preferably 70% by mass or more and 99% by mass or less, further preferably 80% by mass or more and 99% by mass or less, and particularly preferably 85% by mass or more and 96% by mass or less. As the polyamide 6 for the functional layer, the polyamide 6 used for the substrate layer can be similarly used.

The functional layer may contain a polyamide resin other than polyamide 6. Examples of the polyamide resin other than polyamide 6 include polyamide MXD6 resin, polyamide 11, polyamide 12, and polyamide 66. When the functional layer contains the polyamide resin other than polyamide 6, the content of it is preferably 1% by mass or more and 30% by mass or less, more preferably 3% by mass or more and 20% by mass or less, and particularly preferably 5% by mass or more and 10% by mass or less based on 100% by mass of the functional layer. The inclusion of the polyamide resin other than polyamide 6 in an amount of 1% by mass or more can prevent the cast sheet from crystallizing before stretching, thereby decreasing the stress during stretching. The inclusion of the polyamide resin other than polyamide 6 in an amount of 30% by mass or less is preferable because the puncture strength of the film is not lowered. As the polyamide resin other than polyamide 6, polyamide MXD6 resin is preferably used.

The functional layer preferably contains an aromatic polyamide resin in an amount of 1% by mass or more and 30% by mass or less. The inclusion of the aromatic polyamide resin makes it easier to reduce the standard deviation of thickness particularly in the film width direction. The content is more preferably 3% by mass or more and 20% by mass or less, and particularly preferably 5% by mass or more and 10% by mass or less. The aromatic polyamide resin is preferably at least one selected from the group consisting of polyamide MXD6 resin, polyamide MXD10 resin, polyamide 11/6T copolymer resin, and mixtures thereof, and is more preferably polyamide MXD6 resin.

The functional layer may contain polyamide copolymer resins such as polyamide 6/12 copolymer resin and polyamide 6/66 copolymer resin for the purpose of improving the adhesion with the sealant film.

The functional layer may further contain a polyamide resin at least partially derived from biomass. As the polyamide resin at least partially derived from biomass, polyamide 11, polyamide 610, polyamide 1010, and polyamide 410 are preferably used.

When the biaxially stretched polyamide film is used in the outer surface side of a packaging bag, the functional layer preferably has low coefficients of friction. Preferably, the functional layer is substantially free from the anti-pinholing agent. The substantial absence of the anti-pinholing agent in the functional layer can prevent a decrease in the film stiffness and the worsening of slipperiness due to the tackiness of the anti-pinholing agent. Further, the substantial absence of the anti-pinholing agent in the functional layer can increase the laminate strength of the film, thereby preventing wrinkling. The term "substantial absence" as used herein means that the content of the anti-pinholing agent is zero, or the content of it is so low that it does not affect the friction and the laminate strength, and specifically means that the content is 0.1% by mass or less based on the functional layer.

The functional layer preferably contains a fine particle and/or an organic lubricant as a lubricant to lower the coefficients of friction of the film. By improving the slipperiness, the film handleability can be enhanced, thereby reducing the tearing of a packaging bag due to friction.

As the fine particles, any type of fine particle can be appropriately selected and used from inorganic fine particles such as silica, kaolin, and zeolite, and polymeric organic fine particles such as acrylic-based and polystyrene-based fine particles. From the viewpoint of the transparency and the slipperiness, a silica fine particle is preferably used.

One preferred method to obtain the biaxially stretched polyamide film includes the use of a specific type of silica fine particle having a pore volume of from 0.5 mL/g to 2.0 mL/g and an average particle size of 7.0 $\mu$m or less. A silica fine particle having a pore volume of from 0.8 mL/g to 1.6 mL/g and an average particle size of from 0.5 $\mu$m to 5.0 $\mu$m is more preferable. The silica fine particle having the pore volume and the average particle size within the above range is preferable because it is fragmented by kneading with a screw during melt extrusion for film formation, thereby generating a greater number of finer particles and enabling the introduction of numerous protrusions on the film surface. Further, the silica fine particle having the pore volume and the average particle size within the above range is preferable because the silica fine particle appropriately crushed by the stress due to the stretching in the flow direction and the width direction can prevent the formation of voids between the resin and the particles, enabling suitable film transparency for packaging foodstuffs to be maintained. In addition, the silica fine particle having the pore volume and the average particle size within the above range enables the introduction of a large number of small protrusions of approximately 0.1 $\mu$m on the film surface. These small protrusions have little impact on worsening of the film's transparency while effectively contributing to the friction of the film. The average particle size of the silica fine particle can be measured using, for example, a laser diffraction particle size analyzer (SALD-2200, manufactured by SHIMADZU CORPORATION). The pore volume of the silica fine particle can be measured using, for example, an accelerated surface area and porosimetry system manufactured by SHIMADZU CORPORATION (ASAP 2400), by integrating the pore volume over a predetermined range of pore diameter (from 17Å to 3000 Å), using BJH method utilizing nitrogen adsorption and desorption (for more details, refer to Shimadzu hyoron, vol. 48, no. 1, pp. 35-49).

Another preferred method to obtain the biaxially stretched polyamide film includes the use of two or more types of silica fine particles having different pore volumes.

The biaxially stretched polyamide film having a thickness of less than 12 $\mu$m after stretching has decreased film stiffness, hence, improving the slipperiness of the film is preferred to prevent wrinkling during processing. When the silica fine particle having a large pore volume is used, the aggregated silica is crushed by stress during stretching of the film, thereby improving the slipperiness while suppressing the increase in the haze by preventing voids formation between the resin and the particles in the film. Further, the use of silica fine particles having small pore volume, i.e., the use of silica fine particles that are not easily crushed by the stress during the film stretching, facilitates the formation of surface protrusions, effectively providing slipperiness. Hence, the use of two or more types of silica fine particle having different pore volumes is preferable.

Among the two or more types of silica fine particles having different pore volumes, a silica fine particle having a larger pore volume has a pore volume in the range of preferably from 0.1 mL/g to 2.0 mL/g, more preferably from 0.8 mL/g to 1.8 mL/g, and further preferably from 1.0 mL/g to 1.6 mL/g. The content of the silica fine particle having a larger pore volume is preferably 0.1% by mass or more and 1.0% by mass or less, more preferably 0.3% by mass or more and 0.8% by mass or less, and further preferably 0.4% by mass or more and 0.7% by mass or less. Among the two or more types of the silica fine particles having different pore volumes, a silica fine particle having a smaller pore volume has a pore volume in the range of preferably from 0.1 mL/g to 2.0 mL/g, more preferably from 0.3 mL/g to 1.0 mL/g, and further preferably from 0.5 mL/g to 0.8 mL/g. The content of the silica fine particle having a smaller pore volume is preferably 0.025% by mass or more and 0.5% by mass or less, more preferably 0.04% by mass or more and 0.17% by mass or less, and further preferably 0.05% by mass or more and 0.1% by mass or less. Preferably, the pore volume of the silica fine particle having a larger pore volume is in the range of from 1.0 mL/g to 2.0 mL/g, and the pore volume of the silica fine particle having a smaller pore volume is in the range of from 0.1 mL/g to 0.9 mL/g.

The functional layer preferably contains a silica fine particle having an average particle size of less than 5.0 $\mu$m preferably in an amount of 0.1% by mass or more and 2.0% by mass or less. The content is more preferably 0.3% by mass or more and 1.0% by mass or less, further preferably 0.3% by mass or more and 0.8% by mass or less, and particularly preferably 0.4% by mass or more and 0.7% by mass or less. The average particle size of the silica fine particle contained in the functional layer is preferably 0.1 $\mu$m or more and 5.0 $\mu$m or less, more preferably 0.1 $\mu$m or more and 4.0 $\mu$m or less, and further preferably 0.1 $\mu$m or more and less than 2.0 $\mu$m.

As the organic lubricants that can be contained in the functional layer, a fatty acid amide and/or a fatty acid bisamide are preferably used, and a fatty acid amide is more preferably used. Examples of the fatty acid amide and the fatty acid bisamide include erucic acid amide, stearic acid amide, ethylene bisstearic acid amide, ethylene bisbehenic acid amide, and ethylene bisoleic acid amide. The content of the organic lubricant is preferably 0.01% by mass or more and 0.40% by mass or less, and more preferably 0.05% by mass or more and 0.30% by mass or less based on the functional layer. The content of 0.01% by mass or more can impart the effect of improving slipperiness. The content of 0.40% by mass or less can ensure the wettability of a printing ink, when a printing layer is provided on the functional layer side.

The functional layer may contain other thermoplastic resins and various additives such as lubricants, heat stabilizers, antioxidants, antistatic agents, antifogging agents, ultraviolet absorbers, dyes, and pigments, if needed.

The thickness of the substrate layer is preferably 50% or more and 90% or less, and particularly preferably 60% or more and 80% or less based on the total thickness of the substrate layer and the functional layer (when the film includes plurality of substrate layers and functional layers, the total thickness of them) of 100%. The bending pinhole resistance can be imparted by adjusting the thickness of the substrate layer to 50% or more. The friction pinhole resistance can be imparted to the functional layer by adjusting the thickness of the substrate layer to 90% or less.

The packaging material according to one or more embodiments is a laminated film including the biaxially stretched polyamide film and a sealant film. As the sealant film, an unstretched linear low-density polyethylene (LLDPE) film, an unstretched polypropylene (CPP) film, and an ethylene-vinyl alcohol copolymer (EVOH) film can be used. The sealant film may have a mono-layer structure or a multi-layer structure including two or more layers. The sealant film may include at least one layer formed from a polyethylene resin composition, and optionally a layer formed from any other resin. The sealant film may be laminated in direct contact with the biaxially stretched polyamide film or may be laminated with the biaxially stretched polyamide film via another layer such as an adhesive layer. The packaging material may include a printing layer. The packaging material is subjected to bag-making process to be made into a packaging bag.

The lower limit of the thickness of the sealant film is preferably 15 $\mu$m, more preferably 20 $\mu$m, and particularly preferably 25 $\mu$m. The thickness of the sealant film of 15 $\mu$m or more makes it easy to obtain heat seal strength. The upper limit of the thickness of the sealant film is preferably 80 $\mu$m, more preferably 70 $\mu$m, and particularly preferably 60 $\mu$m. The thickness of the sealant film of 80 $\mu$m or less provides moderate stiffness to the film, making processing of the laminate easy.

The packaging material may further include a paper substrate layer. Examples of the paper substrate include various types of paper substrates such as bleached or unbleached paper substrates having strong sizing properties, pure white roll paper, kraft paper, paperboards, processed paper, and the like. The paper substrate preferably has a basis weight of from approximately 30 g/m$^2$ to 600 g/m$^2$, and preferably from approximately 40 g/m$^2$ to 450 g/m$^2$.

The packaging material may be a laminated film including the biaxially stretched polyamide film, a metal layer, and a sealant film. Metals used for the metal layer can include various metallic elements such as aluminum, iron, copper, and nickel, and an aluminum layer is particularly preferable. The thickness of the metal layer is preferably from 15 $\mu$m to 80 $\mu$m, and particularly preferably from 20 $\mu$m to 60 $\mu$m. The metal layer may be laminated in direct contact with the biaxially stretched polyamide film or may be laminated with the biaxially stretched polyamide film via another layer, such as an adhesive layer. The sealant layer may be laminated in direct contact with the metal layer or may be laminated with the metal layer via another layer, such as an adhesive layer. The packaging material may include a printing layer. The packaging material has high impact resistance, improved bending pinhole resistance, and excellent friction pinhole resistance, hence, the packaging material can be suitably used for battery packaging material, such as lithium-ion batteries, requiring high strength and durability.

[Method for Producing Biaxially Stretched Polyamide Film]

Hereinafter, the method for producing the biaxially stretched polyamide film according to one embodiment will be described.

The raw material resins are melt extruded using an extruder first, then the resulting molten resins are extruded from a T-die into a film shape and cast onto a cooling-roll for cooling, and an unstretched laminated film including, preferably, the substrate layer and the functional layer can be obtained. The unstretched laminated film is preferably produced by a co-extrusion method using a feed block, or a multi-manifold. Other than the co-extrusion method, a dry lamination method and an extrusion lamination method can be selected. When the layers are laminated by the co-extrusion method, the first resin composition that constitutes the substrate layer and the second resin composition that constitutes the functional layer preferably have a smaller difference in their melt viscosities.

The melting temperature of the resin is preferably 220°C or higher and 350°C or lower. Controlling the resin melting temperature to the range is preferable because the generation of unmelted materials, which cause defects, is prevented, and a cast sheet without resin degradation can be obtained. For the same reasons, the temperature of the T-die is preferably 250°C or higher and 350°C or lower. The cooling-roll temperature is preferably -30°C or higher and 80°C or lower, and more preferably 0°C or higher and 50°C or lower. To obtain the unstretched film by casting a film-shaped molten resin extrudate from the T-die onto a rotating cooling-drum and cooling it, for example, a method using an air knife or an electrostatic adhesion method utilizing the application of a static charge can be preferably employed. Also, it is preferable to cool the surface of the cast unstretched film that is opposite to the cooling-roll. For example, a method such as bringing a cooling liquid in a tank into contact with the surface of the unstretched film opposite to the cooling-roll, applying a vaporized liquid with a spray nozzle, or cooling by blowing a high-velocity fluid can be preferably used in combination. The obtained unstretched film is then stretched in two axial directions to obtain the biaxially stretched polyamide film.

As a stretching method, either a simultaneous biaxial stretching method or a sequential biaxial stretching method can be employed. The sequential biaxial stretching method is preferable from the viewpoint of its advantage in production cost, because the method can increase the film formation speed. In either method, single-stage stretching or multistage stretching such as two-stage stretching can be employed as the stretching method in the film flow direction (hereinafter, referred to as MD direction in some cases). As described below, the multistage stretching in the MD direction, such as two-stage stretching, is preferable from the viewpoints of the uniformity (isotropy) of physical properties in both the MD direction and the film width direction (hereinafter, referred to as TD direction in some cases), rather than single-stage stretching. In the sequential biaxial stretching method, stretching in the MD direction is conducted preferably by roll stretching.

The lower limit of the stretching temperature in the MD direction is preferably 50°C, more preferably 55°C, and further preferably 60°C. Setting the lower limit of the stretching temperature to 50°C or higher is preferable because the resin temperature becomes the glass transition point, making the resin flexible and thus enabling stretching. The upper limit of the stretching temperature in the MD direction is preferably 120°C, more preferably 115°C, and further preferably 110°C. Setting the upper limit of the stretching temperature to 120°C or lower is preferable to avoid sticking of the resin to a roll.

The lower limit of the stretching ratio in the MD direction (a total stretching ratio in the case of multistage stretching, which is obtained by multiplying the stretching ratios in each stage) is preferably 2.2 times, more preferably 2.5 times, and further preferably 2.8 times. Setting the lower limit of the stretching ratio to 2.2 times or more enables the film orientation, allowing for high impact resistance. The upper limit of the stretching ratio in the MD direction is preferably 5.0 times, more preferably 4.5 times, and most preferably 4.0 times. Adjusting the upper limit of the stretching ratio to 5.0 times or less is preferable because it enables the film to be stretched without breakage and unevenness in the downstream stretching stages.

In the case of multistage stretching in the MD direction, stretching can be carried out as described above in each stretching stage, and the stretching ratios are adjusted so that the total stretching ratio in the MD direction, which is a product of the stretching ratio in each stage, can become 5.0 or less. For example, in the case of two-stage stretching, the stretching ratio in the first stage is preferably set to from 1.5 times to 2.1 times, and the stretching ratio in the second stage is preferably set to from 1.5 times to 1.8 times.

The film stretched in the MD direction is then stretched in the TD direction using a tenter, subjected to a heat setting treatment, and undergoes a relaxation treatment (also referred to as a "stress relief treatment"). The lower limit of the stretching temperature in the TD direction is preferably 50°C, more preferably 55°C, and further preferably 60°C. Setting the lower limit of the stretching temperature in the TD direction to 50°C or higher is preferable because the resin becomes sufficiently flexible for effective stretching. The upper limit of the stretching temperature in the TD direction is preferably 190°C, more preferably 185°C, and further preferably 180°C. Setting the lower limit of the stretching temperature in the TD direction to 190°C or lower is preferable because resin crystallization can be prevented, thereby enabling effective stretching.

The lower limit of the stretching ratio in the TD direction (a total stretching ratio in the case of multistage stretching, which is obtained by multiplying the stretching ratios in each stage) is preferably 2.8 times, more preferably 3.2 times, further preferably 3.5 times, and particularly preferably 3.8 times. Setting the lower limit of the stretching ratio in the TD direction to 2.8 times or more is preferable because the thickness accuracy in the TD direction can be improved. The upper limit of the stretching ratio in the TD direction is preferably 5.5 times, more preferably 5.0 times, further preferably 4.7 times, particularly preferably 4.5 times, and most preferably 4.3 times. Setting the upper limit of the stretching ratio in the TD direction to 5.5 times or less is preferable because breakage during stretching can be prevented, enabling high productivity.

The lower limit of the heat setting temperature is preferably 210°C, and more preferably 212°C. Setting the lower limit of the heat setting temperature to 210°C or higher is preferable because the heat shrinkage rate and the laminate strength appropriate for lamination process can be provided. The upper limit of the heat setting temperature is preferably 220°C, and more preferably 218°C. Setting the upper limit of the heat setting temperature to 220°C or lower is preferable because the film can be prevented from being brittle due to thermal crystallization. The heat setting time is preferably from 0.5 seconds to 20 seconds, and further preferably from 1 second to 15 seconds. The heat setting time can be appropriately determined in accordance with the heat setting temperature and the air velocity in the heat setting zone. Under significantly weak heat setting conditions, insufficient crystallization and orientation relaxation increases the heat shrinkage rate, leading to problems such as deteriorated appearance in lamination and decreased laminate strength. Significantly strong heat setting conditions decrease the toughness of the film.

It is effective to conduct a relaxation treatment after the heat setting treatment from the viewpoint of controlling the heat shrinkage rate. The relaxation treatment temperature can be a temperature in the range of from the heat setting temperature to the Tg of the resin, and preferably in a temperature range of from the "heat setting temperature(°C) - 10"°C or higher to the "Tg(°C) + 10"°C or lower. An excessively high relaxation treatment temperature is not preferable because it undesirably causes an excessively rapid shrinkage, resulting in distortion or other defects. Conversely, the relaxation treatment cannot be appropriately conducted at a significantly low relaxation treatment temperature. Instead, the film is merely loosened without a decrease in the heat shrinkage rate, resulting in worsened dimensional stability. In the relaxation treatment, the lower limit of the relaxation rate is preferably 0.5%, and more preferably 1%. When the relaxation rate is less than 0.5%, the heat shrinkage rate may not be sufficiently lowered. The upper limit of the relaxation rate is preferably 20%, more preferably 15%, and further preferably 10%. The relaxation rate of more than 20% may cause sagging of the film in a tenter, making the film production difficult.

In addition, the biaxially stretched polyamide film may be subjected to a heat treatment and a moisture conditioning treatment to have improved dimensional stability according to purposes. Furthermore, the film may be subjected to corona treatment, coating treatment, and flame treatment to have improved surface adhesion. Also, the film may be subjected to a printing process and a deposition process to deposit metals and inorganic oxides.

The present application claims benefit of priority to Japanese Patent Application No. 2023-008257 filed on January 23rd, 2023. The entire contents of the specification of Japanese Patent Application No. 2023-008257 filed on January 23rd, 2023, are incorporated herein by reference.

EXAMPLES

Hereinafter, the present invention will be specifically described with Examples, and the scope of the present invention is not limited by the following Examples. The present invention can be carried out with modifications within a range conforming to the gist described above and/or below, all of which are included in the technical scope of the present invention.

Films were evaluated using the following measurement methods. Unless otherwise specified, the measurements were conducted in a measurement room, in an environment at 23°C and a relative humidity of 65%.

(1) Film Haze Value

The film haze value was measured using a direct reading haze meter manufactured by Toyo Seiki Seisaku-sho, Ltd. in accordance with JIS K 7136:2000.

(2) Static Coefficient of Friction and Kinetic Coefficient of Friction of Film

The static coefficient of friction and the kinetic coefficient of friction between the outer surfaces of the wound film were evaluated in accordance with JIS C 2151 under the following conditions. A test piece was prepared to have dimensions of 130 mm in width and 250 mm in length. The test speed was 150 mm/min.

(3) Stress at 5% Elongation (F5)

The film was left to stand for two hours in a room conditioned to a temperature of 23°C and 50% relative humidity, and then samples were taken from the film by cutting a strip having dimensions of 150 mm (gauge length: 100 mm) in the film MD direction and 15 mm in a direction vertical to the measurement direction and a strip having dimensions of 150 mm (gauge length: 100 mm) in the film TD direction and 15 mm in a direction vertical to the measurement direction. The tensile test was carried out using a tensile tester equipped with a 1 kN load cell and sample chucks (AG-I, manufactured by SHIMADZU CORPORATION) at a tensile speed of 200 mm/min. On the resulting load-elongation curve, the stress at 5% elongation of the sample was determined as an F5 value. The measurement was conducted using three samples and the average was calculated.

(4) Film Puncture Strength

Samples were taken from the biaxially stretched polyamide film as squares having a side length of 5 cm, and the puncture strength was measured using a digital force gauge "ZTS-500N", motorized test stand "MX2-500N", and a film puncture testing fixture "TKS-250N", all manufactured by IMADA Co., Ltd., in accordance with JIS Z 1707. The unit was expressed in N.

(5) Film Average Thickness and Standard Deviation of Film Thickness

A sample having a length of 3 m or more along the MD direction of the film and a sample having a length of 3 m or more along the TD direction of the film were cut out from the film. Then, the thickness of each sample was measured using a micrometer at 10 mm intervals. The average thickness and the standard deviation of film thickness in each direction were determined from the measured thickness values.

(6) Film Heat Shrinkage Rate

The measurement was conducted in accordance with the testing method for dimensional change described in JIS C 2318:2020 except for the test temperature of 160°C and a heating time of 10 minutes, and the heat shrinkage rate was calculated according to the following formula.

Heat shrinkage rate = [(length before treatment - length after treatment)/length before treatment] $\times$ 100 (%)

(7) Film Impact Strength

The impact strength was measured using a film impact tester manufactured by Toyo Seiki Seisaku-sho, Ltd. The measured values were adjusted to the values per a thickness of 10 $\mu$m and expressed with J (joule)/10$\mu$m.

(8) Surface Roughness and Protrusion Density

The average roughness of the film surface (SRa) was measured using a contact-type 3D surface roughness meter (model: ET-4000A) manufactured by Kosaka Laboratory Ltd. by a stylus method under the following conditions. The conditions are described below, and each of the surface roughness and the protrusion density were determined by calculating the average of three measurements.

Stylus tip radius: 0.5 $\mu$m
Stylus force: 50 $\mu$N
Magnification : $\times$20,000
A lower cut off frequency: 0.08 mm
Measurement length in the X direction: 1002 $\mu$m
Measurement length in the Y direction: 202 $\mu$m
Measurement speed: 0.1 mm/s

Subsequently, the particle size was analyzed at a slice level of 0.1 $\mu$m and a slice level of 0.8 $\mu$m from the measured results, and the protrusion density at each level was calculated.

(9) Bending Pinhole Resistance of Film

The number of pinholes resulting from bending fatigue was measured in accordance with the following method using a Gelbo flex tester manufactured by TESTER SANGYO CO., LTD. Specifically, after the application of a polyester-based adhesive to a biaxially stretched polyamide film produced in Example, the film was dry laminated with a linear low-density polyethylene film having a thickness of 40 $\mu$m (L-LDPE film, L4102, manufactured by TOYOBO Co., Ltd.), and the laminate was aged for three days in an environment at 40°C to obtain a laminated film. The resulting laminated film was cut out into test pieces with dimensions of 12 inches x 8 inches. The test piece was shaped into a cylinder having a diameter of 3.5 inches with the L-LDPE side inside, and one end of the cylinder-shaped film was fixed to a fixing head of the Gelbo flex tester, while the other end was fixed to a movable head, with the initial heads spacing of 7 inches. Then, the film was subjected to bending fatigue by applying a motion for 1000 cycles at a speed of 40 cycles/min, where the film was twisted by 440 degrees over the first 3.5 inches of the stroke, and then moved linearly in the horizontal direction over the subsequent 2.5 inches of the stroke to complete one stroke, and the number of pinholes generated in the laminated film was then counted. The measurement was conducted in an environment at 1°C. The test film was then placed on a filter paper (No.50, ADVANTEC, manufactured by TOYO ROSHI KAISHA, LTD.) with the L-LDPE film side downward and fixed at the four corners with cellophane tape (registered trademark). Subsequently, an ink (a 5-fold diluted solution with pure water of an ink with an article number of INK-350-blue, manufactured by PILOT CORPORATION) was applied onto the test film and spread throughout the film using a rubber roller. After wiping off the excess ink, the test film was removed, and the number of ink spots on the filter paper was counted.

(10) Evaluation of Wrinkling during Secondary Processing

A dry laminator having a structure shown in FIG. 1 was used. The biaxially stretched polyamide film 1 was set to the unwinding shaft 3 and conveyed at a speed of 10 m/min. After the application of a polyester-based adhesive to the film by transfer using the gravure roll 4, followed by drying with the dryer 6, the linear low-density polyethylene film 2 having a thickness of 40 $\mu$m (L-LDPE film, L4102, manufactured by TOYOBO Co., Ltd.) was laminated onto the biaxially stretched polyamide film 1, and the resulting laminated film was wound with the winding shaft 8 to obtain a laminated film roll. The secondary processability was evaluate based on wrinkling of the biaxially stretched polyamide film 1 set to the unwinding shaft 3 during conveyance between the gravure roll 4 and the first nip roll 5.

A: The biaxially stretched polyamide film 1 was conveyed between the gravure roll 4 and the first nip roll 5 without wrinkling.

C: The biaxially stretched polyamide film 1 was conveyed between the gravure roll 4 and the first nip roll 5 with wrinkles remaining, and folding of the wrinkles and coating irregularities of the adhesive were observed after the film was passed through the rolls.

The following resin compositions were used for the substrate layer and the functional layer.

<Resin Compositions for Constituting Substrate Layer>

Polyamide 6 (manufactured by TOYOBO Co., Ltd., a relative viscosity: 2.8, a melting point: 220°C)

Polybutylene adipate terephthalate: PBAT (manufactured by BASF SE, ecoflex (registered trademark) F-Blend C1200)

Polybutylene succinate: PBS (SHOWA HIGHPOLYMER CO., LTD., Bionole 1001)

Polybutylene succinate adipate: PBSA (SHOWA HIGHPOLYMER CO., LTD., Bionole 3001)

<Resin Compositions for Constituting Functional Layer>

Polyamide 6: manufactured by TOYOBO Co., Ltd., a relative viscosity of 2.8, a melting point of 220°C

Polyamide MXD6: manufactured by MITSUBISHI GAS CHEMICAL COMPANY, INC., a relative viscosity of 2.1, a melting point of 237°C

Silica fine particle A: manufactured by FUJI SILYSIA CHEMICAL LTD., SYLYSIA 350, an average particle size of 3.9 $\mu$m, a pore volume of 1.6 mL/g

Silica fine particle B: manufactured by FUJI SILYSIA CHEMICAL LTD., SYLYSIA 530, an average particle size of 2.5 $\mu$m, a pore volume of 0.8 mL/g

Silica fine particle C: manufactured by FUJI SILYSIA CHEMICAL LTD., SYLYSIA 370, an average particle size of 6.4

μm, a pore volume of 1.6 mL/g

Silica fine particle D: manufactured by FUJI SILYSIA CHEMICAL LTD., SYLYSIA 250N, an average particle size of 5.0 μm, a pore volume of 1.8 mL/g

Silica fine particle E: manufactured by Mizusawa Industrial Chemicals, Ltd., MIZUKASIL P527, an average particle size of 2.0 μm, a pore volume of 0.1 mL/g

Fatty acid bisamide: manufactured by KYOEISHA CHEMICAL Co., Ltd., ethylene bis stearamide

(Examples 1 to 10)

The raw materials for the substrate layer: layer A and the raw materials for the functional layer: layer B were mixed at mixing ratios shown in Table 1. Then, an unstretched film with a thickness of 130 μm was obtained using equipment including two extruders and a co-extrusion T-die with a width of 380 mm, specifically, by laminating the molten resins of the resin compositions shown in Table 1 into the structure of functional layer: layer B/substrate layer: layer A/functional layer: layer B by a feed block method, then extruding them from a T-die into a film-form, and casting and electrostatically adhering it onto a cooling-roll controlled to 20°C.

The obtained unstretched film was then introduced into a roll-type stretching machine and stretched at 80°C by 3.15 times in the MD direction utilizing the peripheral speed difference of the rolls. Subsequently, the resulting uniaxially stretched film was introduced into a tenter-type stretching machine, then preheated at 60°C, and stretched in the TD direction at 130°C by 4 times. The film was then subjected to a heat setting treatment at 216°C, followed by a relaxation treatment at 216°C by 7%, and corona discharge treatment was applied to one surface of the film to obtain a biaxially stretched polyamide film. The discharge amounts of the molten resins from extruders were adjusted so that the total thickness of the biaxially stretched polyamide film would be 10 μm, the thickness of the substrate layer would be 8 μm, and the thicknesses of front side and backside functional layers would each be 1 μm.

The films obtained in Examples were excellent thin biaxially-stretched polyamide films having low haze values and low coefficients of friction, and exhibiting suppressed wrinkling during secondary processing due to high F5 values in the MD direction. The films had protrusion densities on the surface of 500 protrusions/$m^2$ or more and 5000 protrusions/$m^2$ or less at a slice level of 0.1 μm, and 5 protrusions/$m^2$ or more and 200 protrusions/$m^2$ or less at a slice level of 0.8 μm.

[Table 1A]

| | | | | Example 1 | Example 2 | Example 3 | Example 4 | Example 5 |
|---|---|---|---|---|---|---|---|---|
| Substrate layer (Layer A) Composition | Polyamide 6 | | % by mass | 100 | 100 | 99 | 92 | 80 |
| | Anti-pinholing agent | Type | | - | - | PBAT | PBAT | PBAT |
| | | Amount of addition | % by mass | - | - | 1 | 8 | 20 |
| Functional layer (Layer B) Composition | Polyamide 6 | | % by mass | 88.650 | 89.235 | 89.235 | 89.235 | 89.235 |
| | Polyamide MXD6 | | % by mass | 10 | 10 | 10 | 10 | 10 |
| | Silica fine particle A | | % by mass | 1.200 | 0.540 | 0.540 | 0.540 | 0.540 |
| | Silica fine particle B | | % by mass | - | 0.075 | 0.075 | 0.075 | 0.075 |
| | Silica fine particle C | | % by mass | - | - | - | - | - |
| | Silica fine particle D | | % by mass | - | - | - | - | - |
| | Silica fine particle E | | % by mass | - | - | - | - | - |
| | Fatty acid amide | | % by mass | 0.150 | 0.150 | 0.150 | 0.150 | 0.150 |
| Anti-pinholing agent content converted to total layer basis | | | % | 9.6 | 9.6 | 3.2 | 3.2 | 6.4 |
| Total thickness | | | μm | 10 | 10 | 10 | 10 | 10 |
| Substrate layer thickness | | | μm | 8.0 | 8.0 | 8.0 | 8.0 | 8.0 |
| Laminate structure | | | - | B/A/B | B/A/B | B/A/B | B/A/B | B/A/B |
| Stretching method | | | - | Sequential | Sequential | Sequential | Sequential | Sequential |
| MD stretching temperature | | | °C | 80 | 80 | 80 | 80 | 80 |
| MD stretching ratio | | | - | 3.15 | 3.15 | 3.15 | 3.15 | 3.15 |
| TD preheating temperature | | | °C | 60 | 60 | 60 | 60 | 60 |
| TD stretching temperature | | | °C | 130 | 130 | 130 | 130 | 130 |
| TD stretching ratio | | | - | 4.0 | 4.0 | 4.0 | 4.0 | 4.0 |
| TD heat setting temperature | | | °C | 216 | 216 | 216 | 216 | 216 |
| TD relaxation temperature | | | °C | 216 | 216 | 216 | 216 | 216 |
| TD relaxation rate | | | % | 7 | 7 | 7 | 7 | 7 |
| Haze | | | % | 3.4 | 3.6 | 3.7 | 4.1 | 5.1 |

| | | | | Example 1 | Example 2 | Example 3 | Example 4 | Example 5 |
|---|---|---|---|---|---|---|---|---|
| Friction | Static coefficient of friction | | - | 0.70 | 0.32 | 0.40 | 0.46 | 0.53 |
| | Kinetic coefficient of friction | | - | 0.68 | 0.30 | 0.37 | 0.44 | 0.50 |
| Stress at 5% elongation | MD direction | | MPa | 55.0 | 54.0 | 52.0 | 46.0 | 41.0 |
| | TD direction | | MPa | 36.0 | 44.0 | 43.0 | 40.0 | 37.0 |
| Thickness | Flow direction | Average thickness | $\mu$m | 10.2 | 10.1 | 9.8 | 10.2 | 10.4 |
| | | Standard deviation | - | 0.4 | 0.4 | 0.5 | 0.4 | 0.3 |
| | Width direction | Average thickness | $\mu$m | 10.4 | 10.3 | 9.9 | 10.2 | 10.5 |
| | | Standard deviation | - | 0.6 | 0.5 | 0.5 | 0.3 | 0.4 |
| Heat shrinkage rate | MD direction | | % | 1.2 | 1.1 | 1.0 | 1.1 | 0.9 |
| | TD direction | | % | 1.2 | 1.2 | 1.0 | 1.2 | 1.0 |
| 3D surface roughness | SRa | | $\mu$m | 0.037 | 0.038 | 0.038 | 0.036 | 0.035 |
| | Protrusion density (0.8 $\mu$m) | | protrusions/mm$^2$ | 80 | 50 | 45 | 55 | 45 |
| | Protrusion density (0.1 $\mu$m) | | protrusions/mm$^2$ | 1865 | 1500 | 1450 | 1590 | 1380 |
| Impact strength | | | J/10$\mu$m | 0.76 | 0.77 | 0.75 | 0.74 | 0.69 |
| Puncture strength | | | N/$\mu$m | 0.87 | 0.85 | 0.84 | 0.79 | 0.71 |
| Number of pinholes after bending | | | pinholes | 17 | 18 | 10 | 2 | 0 |
| Wrinkling during processing | | | - | A | A | A | A | A |

[Table 1B]

| | | | | Example 6 | Example 7 | Example 8 | Example 9 | Example 10 |
|---|---|---|---|---|---|---|---|---|
| Substrate layer (Layer A) Composition | Polyamide 6 | | % by mass | 92 | 100 | 92 | 90 | 90 |
| | Anti-pinholing agent | Type | - | PBAT | - | PBAT | PBS | PBSA |
| | | Amount of addition | % by mass | 8 | - | 8 | 10 | 10 |
| Functional layer (Layer B) Composition | Polyamide 6 | | % by mass | 89.160 | 89.450 | 86.350 | 89.235 | 89.235 |
| | Polyamide MXD6 | | % by mass | 10 | 10 | 10 | 10 | 10 |
| | Silica fine particle A | | % by mass | 0.540 | - | - | 0.540 | 0.540 |
| | Silica fine particle B | | % by mass | 0.150 | - | - | 0.075 | 0.075 |
| | Silica fine particle C | | % by mass | - | 0.40 | - | - | - |
| | Silica fine particle D | | % by mass | - | - | 3.50 | - | - |
| | Silica fine particle E | | % by mass | - | - | - | - | - |
| | Fatty acid amide | | % by mass | 0.150 | 0.150 | 0.150 | 0.150 | 0.150 |
| Anti-pinholing agent content converted to total layer basis | | | % | 16.0 | 9.6 | 12.0 | 3.2 | 3.2 |
| Total thickness | | | μm | 10 | 10 | 10 | 10 | 10 |
| Substrate layer thickness | | | μm | 8.0 | 8.0 | 8.0 | 8.0 | 8.0 |
| Laminate structure | | | - | B/A/B | B/A/B | B/A/B | B/A/B | B/A/B |
| Stretching method | | | - | Sequential | Sequential | Sequential | Sequential | Sequential |
| MD stretching temperature | | | °C | 80 | 80 | 80 | 80 | 80 |
| MD stretching ratio | | | - | 3.15 | 3.15 | 3.15 | 3.15 | 3.15 |
| TD preheating temperature | | | °C | 60 | 60 | 60 | 60 | 60 |
| TD stretching temperature | | | °C | 130 | 130 | 130 | 130 | 130 |
| TD stretching ratio | | | - | 4.0 | 4.0 | 4.0 | 4.0 | 4.0 |
| TD heat setting temperature | | | °C | 216 | 216 | 216 | 216 | 216 |
| TD relaxation temperature | | | °C | 216 | 216 | 216 | 216 | 216 |
| TD relaxation rate | | | % | 7 | 7 | 7 | 7 | 7 |
| Haze | | | % | 5.6 | 3.4 | 5.0 | 4.2 | 4.3 |

| | | | | Example 6 | Example 7 | Example 8 | Example 9 | Example 10 |
|---|---|---|---|---|---|---|---|---|
| Friction | Static coefficient of friction | | - | 0.30 | 0.70 | 0.30 | 0.48 | 0.53 |
| | Kinetic coefficient of friction | | - | 0.29 | 0.68 | 0.40 | 0.46 | 0.51 |
| Stress at 5% elongation | MD direction | | MPa | 54.0 | 55.0 | 46.0 | 44.0 | 43.0 |
| | TD direction | | MPa | 44.0 | 36.0 | 39.0 | 36.0 | 35.0 |
| Thickness | Flow direction | Average thickness | $\mu$m | 10.6 | 10.2 | 10.0 | 10.5 | 10.2 |
| | | Standard deviation | - | 0.4 | 0.4 | 0.4 | 0.5 | 0.4 |
| | Width direction | Average thickness | $\mu$m | 10.5 | 10.4 | 10.1 | 10.4 | 10.2 |
| | | Standard deviation | - | 0.4 | 0.6 | 0.5 | 0.6 | 0.3 |
| Heat shrinkage rate | MD direction | | % | 0.9 | 1.4 | 1.2 | 1.1 | 1.3 |
| | TD direction | | % | 1.1 | 1.2 | 1.2 | 1.2 | 1.2 |
| 3D surface roughness | SRa | | $\mu$m | 0.420 | 0.037 | 0.220 | 0.350 | 0.340 |
| | Protrusion density (0.8 $\mu$m) | | protrusions/mm$^2$ | 105 | 35 | 5 | 50 | 55 |
| | Protrusion density (0.1 $\mu$m) | | protrusions/mm$^2$ | 1430 | 692 | 3220 | 1540 | 1445 |
| Impact strength | | | J/10$\mu$m | 0.73 | 0.71 | 0.72 | 0.71 | 0.74 |
| Puncture strength | | | N/$\mu$m | 0.72 | 0.85 | 0.73 | 0.72 | 0.72 |
| Number of pinholes after bending | | | pinholes | 3 | 18 | 1 | 1 | 2 |
| Wrinkling during processing | | | - | A | A | A | A | A |

(Comparative Examples 1 and 3 to 5)

Biaxially stretched polyamide films were produced in the same manner as in Example 1 except that the resin compositions for the substrate layer and the functional layer were changed as shown in Table 2.

(Comparative Example 2)

A biaxially stretched polyamide film was produced in the same manner as in Example 1 except that the MD stretching ratio and the TD stretching ratio were changed to 2.7 times and 3.5 times, respectively.

(Reference Example 1)

A biaxially stretched polyamide film was produced in the same manner as in Comparative Examples 1 except that the film thickness was adjusted to 15 μm.

[Table 2]

| | | | | Comparative Example 1 | Comparative Example 2 | Comparative Example 3 | Comparative Example 4 | Comparative Example 5 | Reference Example 1 |
|---|---|---|---|---|---|---|---|---|---|
| Substrate layer (Layer A) Composition | Polyamide 6 | | % by mass | 100 | 100 | 100 | 70 | 92 | 100 |
| | Anti-pinholing agent | Type | - | - | - | - | - | PBAT | PBAT | - |
| | | Amount of addition | % by mass | - | - | - | 30 | 8 | - |
| Functional layer (Layer B) Composition | Polyamide 6 | | % by mass | 89.310 | 89.235 | 89.110 | 89.235 | 88.800 | 89.310 |
| | Polyamide MXD6 | | % by mass | 10 | 10 | 10 | 10 | 10 | 10 |
| | Silica fine particle A | | % by mass | 0.540 | 0.540 | 0.540 | 0.540 | - | 0.540 |
| | Silica fine particle B | | % by mass | - | 0.075 | 0.200 | 0.075 | - | - |
| | Silica fine particle C | | % by mass | - | - | - | - | - | - |
| | Silica fine particle D | | % by mass | - | - | - | - | - | - |
| | Silica fine particle E | | % by mass | - | - | - | - | 1.05 | - |
| | Fatty acid amide | | % by mass | 0.150 | 0.150 | 0.150 | 0.150 | 0.150 | 0.150 |
| Anti-pinholing agent content converted to total layer basis | | | % | 0.0 | 0.0 | 0.0 | 0.0 | 6.0 | 0.0 |
| Total thickness | | | μm | 10 | 10 | 10 | 10 | 10 | 15 |
| Substrate layer thickness | | | μm | 8.0 | 8.0 | 8.0 | 8.0 | 8.0 | 12 |
| Laminate structure | | | - | B/A/B | B/A/B | B/A/B | B/A/B | B/A/B | B/A/B |
| Stretching method | | | - | Sequential | Sequential | Sequential | Sequential | Sequential | Sequential |
| MD stretching temperature | | | °C | 80 | 80 | 80 | 80 | 80 | 80 |
| MD stretching ratio | | | - | 3.15 | 2.70 | 3.15 | 3.15 | 3.15 | 3.15 |
| TD preheating temperature | | | °C | 60 | 60 | 60 | 60 | 60 | 60 |
| TD stretching temperature | | | °C | 130 | 130 | 130 | 130 | 130 | 130 |
| TD stretching ratio | | | - | 4.0 | 3.5 | 4.0 | 4.0 | 4.0 | 4.0 |
| TD heat setting temperature | | | °C | 216 | 216 | 216 | 216 | 216 | 216 |
| TD relaxation temperature | | | °C | 216 | 216 | 216 | 216 | 216 | 216 |
| TD relaxation rate | | | % | 7 | 7 | 7 | 7 | 7 | 7 |

(continued)

| | | | | Comparative Example 1 | Comparative Example 2 | Comparative Example 3 | Comparative Example 4 | Comparative Example 5 | Reference Example 1 |
|---|---|---|---|---|---|---|---|---|---|
| Haze | | | % | 1.6 | 3.5 | 7.1 | 5.9 | 7.8 | 2.2 |
| Friction | Static coefficient of friction | | - | 1.30 | 0.40 | 0.25 | 0.62 | 0.40 | 0.64 |
| | Kinetic coefficient of friction | | - | 1.25 | 0.39 | 0.25 | 0.61 | 0.38 | 0.62 |
| Stress at 5% elongation | MD direction | | MPa | 54.0 | 54.0 | 53.0 | 38.0 | 53.0 | 58.0 |
| | TD direction | | MPa | 37.0 | 44.0 | 42.0 | 36.0 | 43.0 | 46.0 |
| Thickness | Flow direction | Average thickness | μm | 10.5 | 11.0 | 10.1 | 9.9 | 10.3 | 15.1 |
| | | Standard deviation | - | 0.3 | 0.9 | 0.4 | 0.3 | 0.4 | 0.4 |
| | Width direction | Average thickness | μm | 10.4 | 11.2 | 100 | 10.1 | 10.4 | 15.2 |
| | | Standard deviation | - | 0.4 | 0.8 | 0.3 | 9.9 | 0.3 | 0.4 |
| Heat shrinkage rate | MD direction | | % | 1.1 | 0.8 | 1.1 | 0.8 | 1.1 | 1.3 |
| | TD direction | | % | 1.0 | 0.7 | 1.2 | 0.9 | 1.2 | 1.3 |
| 3D surface roughness | SRa | | μm | 0.210 | 0.035 | 0.560 | 0.035 | 0.520 | 0.210 |
| | Protrusion density (0.8 μm) | | protrusions/mm$^2$ | 30 | 45 | 160 | 45 | 210 | 30 |
| | Protrusion density (0.1 μm) | | protrusions/mm$^2$ | 450 | 1405 | 1510 | 1440 | 420 | 450 |
| Impact strength | | | J/10μm | 0.75 | 0.77 | 0.75 | 0.69 | 0.74 | 0.75 |
| Puncture strength | | | N/μm | 0.87 | 0.82 | 0.82 | 0.63 | 0.73 | 0.88 |
| Number of pinholes after bending | | | pinholes | 20 | 16 | 18 | 0 | 1 | 17 |
| Wrinkling during processing | | | - | C | C | A | C | C | A |

The film of Comparative Example 1 had the same configuration as the film of Reference Example 1 except that the film of the Comparative Example 1 had a thickness of 10 $\mu$m, and the films had equivalent surface protrusion densities with each other. However, the film of Comparative Example 1 had a low protrusion density for a thin film having reduced thickness. As a result, the coefficients of friction were increased, and wrinkling could not be prevented during dry lamination.

In Comparative Example 2, the stretching ratios in both the MD direction and the TD direction were lower than those of Example 3. Although the surface protrusion densities were increased, the stretching at lower ratios caused increases in the film average thicknesses and the standard deviations of the thicknesses, hence, wrinkling could not be prevented during dry lamination. Further, the film roll after processing had a gauge band, resulting in deteriorated roll appearance.

The film of Comparative Example 3 had increased protrusion densities at both slice levels of 0.1 $\mu$m and 0.8 $\mu$m due to the inclusion of the silica fine particle A having a large pore volume and the silica fine particle B having a small pore volume. Although wrinkling during dry lamination was prevented, the film had a haze value of more than 7.0% and exhibited worsened transparency.

The film of Comparative Example 4 had increased protrusion densities at slice levels of both 0.1 $\mu$m and 0.8 $\mu$m due to the inclusion of the silica fine particle A having a large pore volume and the silica fine particle B having a small pore volume. However, the addition of a large amount of PBAT increased the flexibility of the film while reducing the F5 value, causing elongation of the film due to tension during dry lamination and thus longitudinal wrinkling.

Although the film of Comparative Example 5 had increased protrusion density at a slice level of 0.8 $\mu$m due to the inclusion of the silica fine particle E having a small pore volume, the protrusion density at a slice level of 0.1 $\mu$m was low, and wrinkling during lamination process could not be prevented. Further, the small pore volume of the silica fine particle prevented crushing of them during the stretching process, thereby increasing the void formation and thus haze.

EXPLANATION OF LETTERS OR NUMERALS

1: Biaxially stretched polyamide film
2: Linear low-density polyethylene film
3: Unwinding shaft
4: Gravure roll
5: First nip roll
6: Dryer
7: Second nip roll
8: Winding shaft

**Claims**

1. A biaxially stretched polyamide film comprising polyamide 6 as a main constituent component,
   wherein the film has:

   an average thickness of 8 $\mu$m or more and less than 12 $\mu$m in each of a film flow direction and a film width direction;
   a standard deviation of thickness of 0.8 $\mu$m or less in each of the film flow direction and the film width direction;
   a static coefficient of friction and a kinetic coefficient of friction each being 0.9 or less on at least one surface of the film;
   a haze value of 7.0% or less; and
   a stress at 5% elongation of 40.0 MPa or more in the film flow direction.

2. The biaxially stretched polyamide film according to claim 1, wherein the film comprises the polyamide 6 in an amount of 60% by mass or more and 100% by mass or less.

3. The biaxially stretched polyamide film according to claim 1, wherein the film has a protrusion density of 500 protrusions/mm$^2$ or more and 5000 protrusions/mm$^2$ or less at a slice level of 0.1 $\mu$m and a protrusion density of 5 protrusions/mm$^2$ or more and 400 protrusions/mm$^2$ or less at a slice level of 0.8 $\mu$m.

4. The biaxially stretched polyamide film according to claim 1,

wherein the film comprises a substrate layer and a functional layer on at least one surface of the substrate layer, wherein the substrate layer comprises the polyamide 6 in an amount of 80% by mass or more and 99% by mass or less and an anti-pinholing agent in an amount of 1% by mass or more and 20% by mass or less, and wherein the functional layer comprises the polyamide 6 in an amount of 70% by mass or more and 100% by mass or less.

5. The biaxially stretched polyamide film according to claim 4, wherein the substrate layer comprises the polyamide 6 in an amount of 80% by mass or more and 90% by mass or less.

6. The biaxially stretched polyamide film according to claim 4, wherein the anti-pinholing agent comprises at least one selected from the group consisting of a polyolefin, an ionomer polymer, a thermoplastic elastomer, an aliphatic polyester resin, an aliphatic-aromatic polyester resin, and mixtures thereof.

7. The biaxially stretched polyamide film according to claim 4, wherein the anti-pinholing agent comprises at least one selected from the group consisting of an aliphatic polyester resin, an aliphatic-aromatic polyester resin, and mixtures thereof.

8. The biaxially stretched polyamide film according to claim 4, wherein the anti-pinholing agent comprises at least one selected from the group consisting of polybutylene succinate, polybutylene succinate adipate, polybutylene adipate terephthalate, and mixtures thereof.

9. The biaxially stretched polyamide film according to claim 4, wherein the functional layer comprises the polyamide 6 in an amount of 70% by mass or more and 99% by mass or less and an aromatic polyamide resin in an amount of 1% by mass or more and 30% by mass or less.

10. The biaxially stretched polyamide film according to claim 4,
wherein the functional layer comprises the polyamide 6 in an amount of 70% by mass or more and 99% by mass or less, and a silica fine particle having an average particle size of less than 5.0 $\mu$m in an amount of 0.1% by mass or more and 2.0% by mass or less.

11. The biaxially stretched polyamide film according to claim 4, wherein the functional layer comprises the polyamide 6 in an amount of 70% by mass or more
and 99% by mass or less and an organic lubricant in an amount of 0.01% by mass or more and 0.40% by mass or less.

12. The biaxially stretched polyamide film according to claim 1,

wherein the standard deviation of thickness is 0.1 $\mu$m or more in each of the film flow direction and the film width direction,
wherein each of the static coefficient of friction and the kinetic coefficient of friction is 0.1 or more on at least one surface of the film,
wherein the haze value is 1.0% or more, and
wherein the stress at 5% elongation is 100 MPa or less in the film flow direction.

13. A packaging material comprising:

the biaxially stretched polyamide film according to any one of claims 1 to 12, and
a sealant film.

14. A packaging material comprising:

the biaxially stretched polyamide film according to any one of claims 1 to 12,
a metal layer, and
a sealant film.

[FIG. 1]

## INTERNATIONAL SEARCH REPORT

| International application No. |
| --- |
| **PCT/JP2024/001289** |

**A. CLASSIFICATION OF SUBJECT MATTER**

*C08J 5/18*(2006.01)i; *B32B 27/34*(2006.01)i; *B65D 65/40*(2006.01)i
FI:  C08J5/18 CFG; B32B27/34; B65D65/40 D

According to International Patent Classification (IPC) or to both national classification and IPC

**B. FIELDS SEARCHED**

Minimum documentation searched (classification system followed by classification symbols)

C08J5/18; B32B27/34; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2010-234552 A (TOYO BOSEKI KABUSHIKI KAISHA) 21 October 2010 (2010-10-21) claims, paragraphs [0017]-[0019], [0033]-[0045], examples | 1-6, 10-12 |
| Y | | 7-9, 13-14 |
| X | WO 2016/067727 A1 (TOYOBO CO., LTD.) 06 May 2016 (2016-05-06) claims, paragraphs [0017]-[0019], [0028]-[0054], [0062]-[0068], examples | 1-6, 10-14 |
| Y | | 7-9, 13-14 |
| Y | WO 2021/200489 A1 (TOYOBO CO., LTD.) 07 October 2021 (2021-10-07) claims, paragraph [0035], examples | 7-9 |
| Y | JP 2022-100526 A (TORAY ADVANCED FILM CO., LTD.) 06 July 2022 (2022-07-06) claims, paragraphs [0032]-[0034], examples | 14 |
| Y | JP 2021-70259 A (MITSUI CHEMICALS, INC.) 06 May 2021 (2021-05-06) claims, paragraphs [0017]-[0023], examples | 14 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 March 2024** | **26 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/001289**

| Patent document cited in search report | | | Publication date (day/month/year) | Patent family member(s) | | | Publication date (day/month/year) |
|---|---|---|---|---|---|---|---|
| JP | 2010-234552 | A | 21 October 2010 | (Family: none) | | | |
| WO | 2016/067727 | A1 | 06 May 2016 | TW | 201615404 | A | |
| WO | 2021/200489 | A1 | 07 October 2021 | US claims, paragraph [0056], examples | 2023/0340261 | A1 | |
| JP | 2022-100526 | A | 06 July 2022 | (Family: none) | | | |
| JP | 2021-70259 | A | 06 May 2021 | (Family: none) | | | |

Form PCT/ISA/210 (patent family annex) (July 2022)

**REFERENCES CITED IN THE DESCRIPTION**

**Patent documents cited in the description**

- JP 2017171740 A

- JP 2023008257 A

**Non-patent literature cited in the description**

- *Shimadzu hyoron*, vol. 48 (1), 35-49